# EUROPEAN PATENT SPECIFICATION

(11) **EP 3 343 352 B1**
(45) Date of publication and mention of the grant of the patent: **03.06.2020**
(21) Application number: 15903880.1
(22) Date of filing: 18.09.2015
(51) Int. Cl.: G06F 9/00, H04L 29/08, G06F 3/14, G06F 11/34

(54) **METHOD, APPARATUS AND DEVICE FOR INSTRUCTING OPERATIONS ON TERMINAL DEVICE**
VERFAHREN, VORRICHTUNG UND EINRICHTUNG ZUR ANWEISUNG VON OPERATIONEN AUF EINER ENDGERÄTEVORRICHTUNG
PROCÉDÉ, APPAREIL ET DISPOSITIF POUR ORDONNER DES OPÉRATIONS SUR UN DISPOSITIF TERMINAL

(43) Date of publication of application: 04.07.2018
(73) Proprietor: Huawei Technologies Co., Ltd., Longgang District Shenzhen, Guangdong 518129 (CN)
(72) Inventor: ZHANG, Zhengyong, Shenzhen Guangdong 518129 (CN)
(74) Representative: Körber, Martin Hans
(86) International application number: PCT/CN2015/089931
(87) International publication number: WO 2017/045190

(56) References cited:
- EP-A2- 1 191 758
- CN-A- 1 976 352
- CN-A- 102 291 249
- CN-A- 102 664 921
- CN-A- 102 665 177
- CN-A- 102 984 233
- CN-A- 103 685 744
- US-A1- 2005 060 719
- US-A1- 2008 120 553
- US-B1- 6 662 226

## Description

### TECHNICAL FIELD

Embodiments of the present invention relate to communications technologies, and in particular, to a method and an apparatus for providing an instruction in operating a terminal device, and a device.

### BACKGROUND

Intelligent terminal devices such as smartphones, tablet computers, and other intelligent terminals have been widely accepted and used by people. However, because terminal devices have a great variety of models and systems, and system operations are relatively complex, some people cannot operate the terminal devices, and usually need instructions from others to resolve problems that they have encountered.

Currently, a manner of providing an instruction in operating a terminal device is as follows: A user of an instructing end records text or voice information by using a device of the user, describes an operation process, and sends the text or voice information to a peer device. Another user performs the operation according to the text displayed on the device or a voice prompt played on the device. Because an intuitive instruction cannot be provided by using the text and voice, a most frequently used manner is to perform a remote desktop operation by using the Remote Desktop Protocol (Remote Desktop Protocol, RDP), the Citrix ICA (Citrix Independent Computing Architecture, ICA) Protocol, the Remote Frame Buffer (English: Remote Frame Buffer, RFB for short) Protocol, and the like, that is, to directly operate a terminal device of a peer end user by transmitting a remote image and performing remote control. However, a large quantity of remote images need to be transmitted in a remote desktop operation process. This consumes a relatively large quantity of network resources.

Document US 6662226 B1 discloses a system to capture, process and archive user interactive operations.

Document EP 1191758 A2 discloses a method to record remote operation history data in a computer network.

Document US 2008/0120553 A1 discloses a method and system for remotely controlling multiple computer systems.

Document US 2005/0060719 A1 discloses methods and apparatus for capturing and processing user interactions on a computer system.

Document CN 103685744 A discloses a method and system for setting an UI element of an application to a disabled state based on setting instructions from a user.

### SUMMARY

Embodiments of the present invention provide a method applied to a source terminal device according to independent claim 1, a method applied to a target terminal device according to independent claim 4, a source terminal device according to independent claim 8, and a target terminal device according to independent claim 9 for providing an instruction in operating a terminal device, so as to resolve a problem that a relatively large quantity of network resources are consumed when another user is instructed, in a remote desktop manner, in operating a system.

A first aspect of the present invention provides a method for providing an instruction in operating a terminal device applied to a source terminal device, including:
generating(S 101), by the source terminal device, operation record information according to an obtained operation of a user performed on the source terminal device, where the operation record information includes an operation page, an operation component, and an event type that correspond to the operation, where the operation page is a system interface of the source terminal device or interface of an application, and the operation component is a component that may be operated on the operation page to trigger entering another operation page or event; and
sending(S102), by the source terminal device, the operation record information to a target terminal device, where the operation record information is used to instruct the second terminal device to set, according to the operation page, the operation component, and the event type that correspond to the operation, an operation component that does not correspond to the operation component or the event type and that is on the operation page to a disabled state.

With reference to the first aspect, in a first possible implementation of the first aspect, the generating, by the source terminal device, operation record information according to an obtained operation of a user includes:
obtaining(S301, S401), by the source terminal device, an operation record according to the operation of the user, where the operation record includes the operation page, the operation component, and the event type that correspond to the operation; and
converting(S302, S402), by the source terminal device, the operation record into the operation record information in a command sequence format according to an obtained mapping relationship between an operation and a command code, where the command sequence format is a sequence format including a binary command code.

With reference to the first aspect, in a second possible implementation of the first aspect, the method further includes:
sending, by the source terminal device, attribute information to the server, where the attribute information of the source terminal device includes model information and version information of the source terminal device; and
the sending(S303), by the source terminal device, the operation record information to a target terminal device includes:
   sending(S403), by the source terminal device, the operation record information to the target terminal device by using the server.

A second aspect of the present invention provides a method for providing an instruction in operating a terminal device applied to a target terminal device, including:
receiving(S201), by the target terminal device, operation record information sent by a source terminal device, where the operation record information includes an operation page, an operation component, and an event type that correspond to the operation, where the operation page is a system interface of the source terminal device or interface of an application, and the operation component is a component that may be operated on the operation page to trigger entering another operation page or event; and
presenting, by the target terminal device, the operation record information and obtaining the operation that corresponds to the operation page, the operation component, and the event type, where the presenting, by the target terminal device, the operation record information and obtaining the operation that corresponds to the operation page, the operation component, and the event type further includes:
   displaying, by the target terminal device, the operation page in the operation record information, setting, according to the operation component and the event type in the operation record information, an operation component that does not correspond to the operation component or the event type and that is on the operation page to a disabled state, and performing, according to an operation of a user on the operation page, the operation that corresponds to the operation record information.

With reference to the second aspect, in a first possible implementation of the second aspect, the presenting, by the target terminal device, the operation record information and obtaining the operation that corresponds to the operation page, the operation component, and the event type includes:
converting(S304, S406), by the target terminal device, the operation record information into an operation record according to an obtained mapping relationship between an operation and a command code; and
displaying(S305, S407), by the target terminal device, the operation page that corresponds to the operation record, setting, according to the operation component and the event type that correspond to the operation record, an operation component that does not correspond to the operation component or the event type and that is on the operation page to a disabled state, and performing, according to an operation of a user on each operation page, the operation that corresponds to the operation record.

With reference to the first possible implementation of the second aspect, in a second possible implementation of the second aspect, the receiving, by a target terminal device, operation record information sent by a source terminal device includes:
receiving, by the target terminal device, identifiable operation record information that is sent by the source terminal device by using a server, where the identifiable operation record information is obtained by the server by converting, according to attribute information of the source terminal device and attribute information of the target terminal device, the operation record information sent by the source terminal device.

With reference to any one of the first to the second possible implementations of the second aspect, in a third possible implementation of the second aspect, the obtaining, by the target terminal device, a mapping relationship between an operation and a command code includes:
sending, by the target terminal device, an obtaining request to the server, where the obtaining request is used to request to obtain the mapping relationship between an operation and a command code from the server; and
receiving, by the target terminal device, a response message sent by the server, where the response message includes the mapping relationship between an operation and a command code.

A third aspect of the present invention provides a method for providing an instruction in operating a terminal device applied to a server, including:
receiving, by the server, operation record information sent by a source terminal device, where the operation record information includes an operation page, an operation component, and an event type that correspond to an operation of a user obtained by the source terminal device, where the operation page is a system interface of the source terminal device or interface of an application, and the operation component is a component that may be operated on the operation page to trigger entering another operation page or event;
converting(S404), by the server according to pre-obtained attribute information of the source terminal device and pre-obtained attribute information of a target terminal device, a format of the operation record information into a format identifiable to the target terminal device; and
sending(S405), by the server, the converted operation record information to the target terminal device, where before the receiving, by a server, operation record information sent by the source terminal device, the method further includes:
   separately receiving, by the server, the attribute information reported by the source terminal device and the attribute information reported by the target terminal device, where the attribute information includes model information and version information.

A fourth aspect of the present invention provides a source terminal device(10), including:
a processing module(11), configured to generate operation record information according to an obtained operation of a user performed on the source terminal device(10), where the operation record information includes an operation page, an operation component, and an event type that correspond to the operation, where the operation page is a system interface or interface of an application of the source terminal device(10), and the operation component is a component that may be operated on the operation page; and
a sending module(12), configured to send the operation record information to a target terminal device, where the operation record information generated by the processing module(11) is used to instruct the target terminal device to set, according to the operation page, the operation component, and the event type that correspond to the operation, an operation component that does not correspond to the operation component or the event type and that is on the operation page to a disabled state.

A fifth aspect of the present invention provides a target terminal device(20), including:
a receiving module(21), configured to receive operation record information sent by the source terminal device, where the operation record information includes an operation page, an operation component, and an event type that correspond to the operation, where the operation page is a system interface of the source terminal device or interface of an application, and the operation component is a component that may be operated on the operation page to trigger entering another operation page or event;
a display module(22), configured to present the operation record information; and
a processing module, configured to obtain the operation that corresponds to the operation page, the operation component, and the event type, where the processing module (23) is further configured to set, according to the operation page, the operation component, and the event type that correspond to the operation, an operation component that does not correspond to the operation component or the event type and that is on the operation page to a disabled state.

A sixth aspect of the present invention provides a server(30), including:
a receiving module(31), configured to receive operation record information sent by a source terminal device, where the operation record information includes an operation page, an operation component, and an event type that correspond to an operation of a user obtained by the source terminal device, where the operation page is a system interface of the source terminal device or interface of an application, and the operation component is a component that may be operated on the operation page to trigger entering another operation page or event;
a processing module(32), configured to convert, according to pre-obtained attribute information of the source terminal device and pre-obtained attribute information of a target terminal device, a format of the operation record information into a format identifiable to the target terminal device; and
a sending module(33), configured to send the converted operation record information to the target terminal device, where the receiving module(31) is further configured to separately receive the attribute information reported by the source terminal device and the attribute information reported by the target terminal device, where the attribute information comprises model information and version information.

In the method and the apparatus for providing an instruction in operating a terminal device, and the device that are provided in the present invention, a first terminal device records an operation of a user, generates operation record information including an operation page, an operation component, and an event type, and sends the operation record information to a second terminal device. The second terminal device receives and displays the operation record information, and instructs a user in performing the operation according to the prompted operation page, the prompted operation component, and the prompted event type. Only operation record information needs to be transmitted between terminal devices, and a large quantity of remote images do not need to be transmitted, thereby effectively saving network resources.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic diagram of a communication scenario according to an embodiment of the present invention;
FIG. 2 is a flowchart of Embodiment 1 of a method for providing an instruction in operating a terminal device according to an embodiment of the present invention;
FIG. 3 is a flowchart of Embodiment 2 of a method for providing an instruction in operating a terminal device according to an embodiment of the present invention;
FIG. 4a to FIG. 4e are schematic diagrams of a process of operating a mobile phone of an instructing end according to an embodiment of the present invention;
FIG. 5a to FIG. 5d are schematic diagrams of a process of operating a mobile phone of an instructed end according to an embodiment of the present invention;
FIG. 6 is an interaction flowchart of Embodiment 3 of a method for providing an instruction in operating a terminal device according to an embodiment of the present invention;
FIG. 7 is an interaction flowchart of Embodiment 4 of a method for providing an instruction in operating a terminal device according to an embodiment of the present invention;
FIG. 8 is a schematic structural diagram of Embodiment 1 of an apparatus for providing an instruction in operating a terminal device according to an embodiment of the present invention;
FIG. 9 is a schematic structural diagram of Embodiment 2 of an apparatus for providing an instruction in operating a terminal device according to an embodiment of the present invention;
FIG. 10 is a schematic structural diagram of Embodiment 3 of an apparatus for providing an instruction in operating a terminal device according to an embodiment of the present invention;
FIG. 11 is a schematic structural diagram of Embodiment 4 of an apparatus for providing an instruction in operating a terminal device according to an embodiment of the present invention;
FIG. 12 is a schematic structural diagram of Embodiment 5 of an apparatus for providing an instruction in operating a terminal device according to an embodiment of the present invention;
FIG. 13 is a schematic structural diagram of Embodiment 6 of an apparatus for providing an instruction in operating a terminal device according to an embodiment of the present invention;
FIG. 14 is a schematic structural diagram of Embodiment 1 of a terminal device according to an embodiment of the present invention;
FIG. 15 is a schematic structural diagram of Embodiment 2 of a terminal device according to an embodiment of the present invention;
FIG. 16 is a schematic structural diagram of Embodiment 3 of a terminal device according to an embodiment of the present invention;
FIG. 17 is a schematic structural diagram of Embodiment 4 of a terminal device according to an embodiment of the present invention; and
FIG. 18 is a schematic structural diagram of Embodiment 1 of a server according to an embodiment of the present invention

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention.

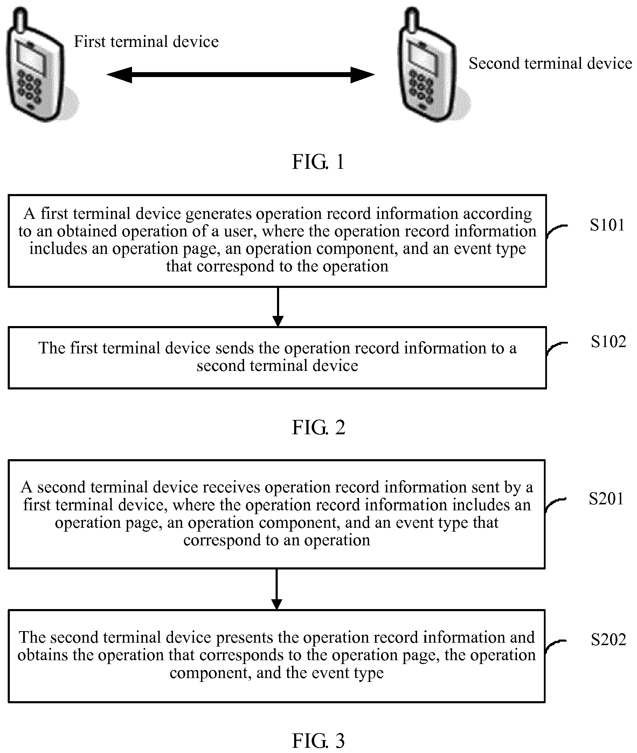

FIG. 1 is a schematic diagram of a communication scenario according to an embodiment of the present invention. Solutions of the present invention may be applied between terminal devices. When needing to provide an instruction in operating another terminal device, a first terminal device of a transmit end records an operation process according to an operation of a user, to obtain operation record information, and sends the operation record information to a second terminal device. The operation record information is displayed on the second terminal device, and is used to instruct a user operation on the second terminal device. A general communication scenario includes at least: one first terminal device and at least one second terminal device. As shown in FIG. 1, a mobile phone is used as an example in the figure. A terminal device in the present invention is not limited to a mobile phone, and may be a computer, a tablet computer, or an intelligent terminal. This is not specifically limited. In a possible communication scenario, the terminal device in the present invention may be a server. Data transmission is performed between the first terminal device and the second terminal device by using the server.

FIG. 2 is a flowchart of Embodiment 1 of a method for providing an instruction in operating a terminal device according to an embodiment of the present invention. As shown in FIG. 2, based on the communication scenario shown in FIG. 1, the solution is executed by a first terminal device. The method for providing an instruction in operating a terminal device includes the following specific steps.

S101: The first terminal device generates operation record information according to an obtained operation of a user, where the operation record information includes an operation page, an operation component, and an event type that correspond to the operation.

In this embodiment, the first terminal device obtains operation information that corresponds to the operation of the user, and stores the operation record information of the user. Usually, the operation record information includes at least the operation page, the operation component, and the event type. A specific format of an operation record usually is:
operation page | component ID | event type.

Using an example of clicking a page button on an Android terminal device, a format is:
Activiy.View1 | Button 1 | Click

The generated operation record information includes at least an operation page, an operation component, and an event type that correspond to one operation. When an operation process including multiple operation steps needs to be performed, the operation record information includes operation pages, operation components, and event types of sequentially performed operations.

Optionally, in a specific implementation, the operation record information is used to instruct the second terminal device to set, according to the operation page, the operation component, and the event type that correspond to the operation, an operation component that does not correspond to the operation component or the event type and that is on the operation page to a disabled state. That is, the operation record information is used to instruct to operate the second terminal device, and a component that does not correspond to the operation component or the event type in the operation record information is disabled, avoiding an operation error.

S102: The first terminal device sends the operation record information to a second terminal device.

In this embodiment, the first terminal device sends the operation record information to the second terminal device for displaying, so that the user performs an operation according to the operation page, the operation component, and the event type.

Specifically, after obtaining the operation record information, the first terminal device sends the operation record information to the second terminal device, to provide an instruction in operating the second terminal device according to the operation record information, that is, displaying the corresponding operation page, collecting the operation of the user, and entering a next page according to the operation. After operation instruction is completed according to the foregoing process, a user of a peer end is prompted, by using the operation component and the event type, to perform operations sequentially, so as to complete required setting.

The foregoing operation page may be a system interface of the first terminal device, or may be an interface of an application. The operation component is a component that may be operated on the operation page, that is, a component that may trigger entering another page or event. The event type is a specific operation on the operation component, and may be a specific operation, such as clicking, double-clicking, or sliding.

By means of the method for providing an instruction in operating a terminal device provided in this embodiment, a first terminal device records an operation of a user, generates operation record information including an operation page, an operation component, and an event type, and sends the operation record information to a second terminal device. The second terminal device receives the operation record information, displays the operation record information for reference of the user, and obtains the user operation that corresponds to the prompted operation page, the prompted operation component, and the prompted event type, so as to complete an operation instruction process. Only operation record information needs to be transmitted between terminal devices, and a large quantity of remote images do not need to be transmitted, thereby effectively saving network resources.

FIG. 3 is a flowchart of Embodiment 2 of a method for providing an instruction in operating a terminal device according to an embodiment of the present invention. As shown in FIG. 3, based on the communication scenario shown in FIG. 1, the solution is executed by a second terminal device. The method for providing an instruction in operating a terminal device includes the following specific steps:
S201: The second terminal device receives operation record information sent by a first terminal device, where the operation record information includes an operation page, an operation component, and an event type that correspond to an operation.
S202: The second terminal device presents the operation record information and obtains the operation that corresponds to the operation page, the operation component, and the event type.

In this embodiment, after receiving the operation record information sent by the first terminal device, the second terminal device is triggered and turned on by a user, and displays the operation record information, so as to prompt the user to sequentially perform operations according to the displayed content. A specific implementation is:
The second terminal device displays the operation page in the operation record information, sets, according to the operation component and the event type in the operation record information, an operation component that does not correspond to the operation component or the event type and that is on the operation page to a disabled state, and performs, according to an operation of the user on each operation page, the operation that corresponds to the operation record.

The disabled state herein is an inactivated state, that is, a state in which a clicking operation cannot be performed.

The second terminal device displays a first operation page in order, and disables, according to an operation component and an event type that correspond to the first operation page, an operation component and an event type that do not correspond to the operation and that are on the operation page, and after obtaining an operation of the user corresponding to the operation component and the event type that correspond to the operation page, instructs, in the same manner, the user in operating a next operation page.

That is, the second terminal device displays the first operation page in the operation record information according to the operation record information, highlights or displays a corresponding operation component to be operated, to prompt a user to perform an operation, and disables, according to the event type, a component, a page, or the like that does not need to be operated. For example, gray-scale processing is performed, and only an operation component needing to be clicked by a user is displayed.

By means of the method for providing an instruction in operating a terminal device provided in this embodiment, a second terminal device receives operation record information that is sent by a first terminal device, that includes an operation page, an operation component, and an event type, and that is generated by recording an operation of a user, and displays the operation record information, so that the user performs the operation according to the prompted operation page, the prompted operation component, and the prompted event type. Only operation record information needs to be transmitted between terminal devices, and a large quantity of remote images do not need to be transmitted, thereby effectively saving network resources.

Based on the foregoing two embodiments, an actual operation process of the technical solutions of the present invention is described below by using an example of muting an Android mobile phone.

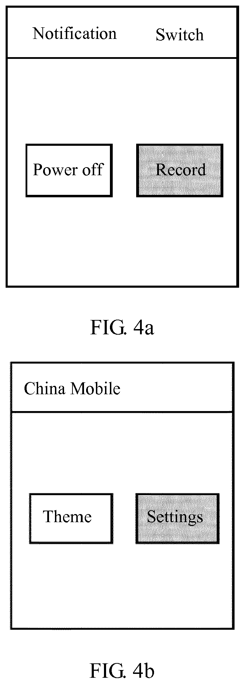

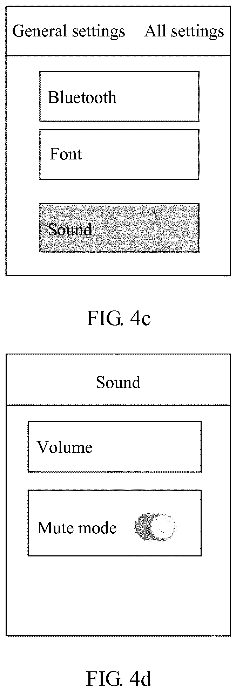

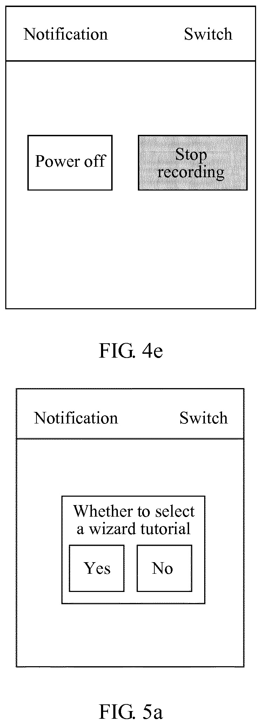

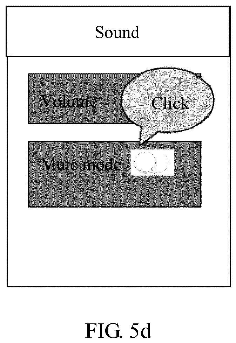

FIG. 4a to FIG. 4e are schematic diagrams of a process of operating a mobile phone of an instructing end according to an embodiment of the present invention. FIG. 5a to FIG. 5d are schematic diagrams of a process of operating a mobile phone of an instructed end according to an embodiment of the present invention. As shown in FIG. 4a to FIG. 4e, on a source terminal side (that is, the instructing end), a function of starting to record operation record information may be set in setting functions of the mobile phone, or in a drop-down status bar, or in other functions. In this instance, the function of starting to record operation record information is set in the drop-down status bar. A "Record" button is clicked to enter a recording mode, and a desktop is displayed. A user selects a "Settings" button to enter a setting mode, and selects "Sound" in settings to set a sound mode, to display a next screen. The user switches on a "Mute mode", to complete setting the mute mode of the mobile phone. The user selects "Stop recording" in the drop-down status bar to end operation recording. The mobile phone generates corresponding operation record information according to the operation process, and sends the operation record information to a peer end mobile phone on which an operation needs to be instructed.

In this embodiment, a screen of the drop-down status bar is a first operation page. A next screen entered after each operation is an operation page. "On" and "Off" in a "Mute mode" on the screen both are operation components. "Clicking a "Record" button" or "switching on a "Mute mode"" herein is an event type.

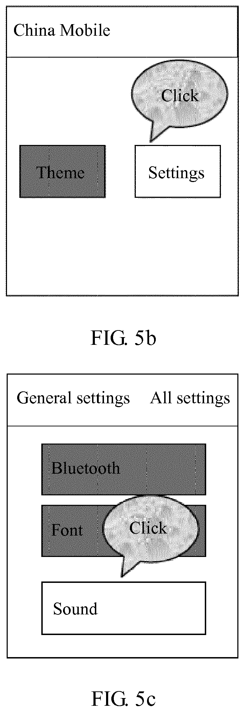

As shown in FIG. 5a to FIG. 5d, on a target terminal side (that is, an instructed end), after receiving operation record information sent by a peer end mobile phone (a source terminal), a mobile phone to be instructed decodes the operation record information, and prompts a user whether to select a wizard tutorial. After a user performs triggering to enter the wizard tutorial, a first operation page, that is, a setting page in FIG. 5b, of the operation record information is displayed, and "Theme" in the setting page is set to be disabled. That is, the user can click only a "Settings" button, to enter a next operation page. That is, in a commonly used setting page in FIG. 5c, a "Bluetooth" button and a "Font" button are disabled, to prompt the user to operate a "Sound" button. A next operation page is entered. The "Volume" is set to be disabled according to a corresponding operation component and a corresponding event type. The user can operate only a switch of the "Mute mode". After setting on the mute mode of the mobile phone is completed, displaying of the tutorial is completed. Whether to exit is triggered by the user.

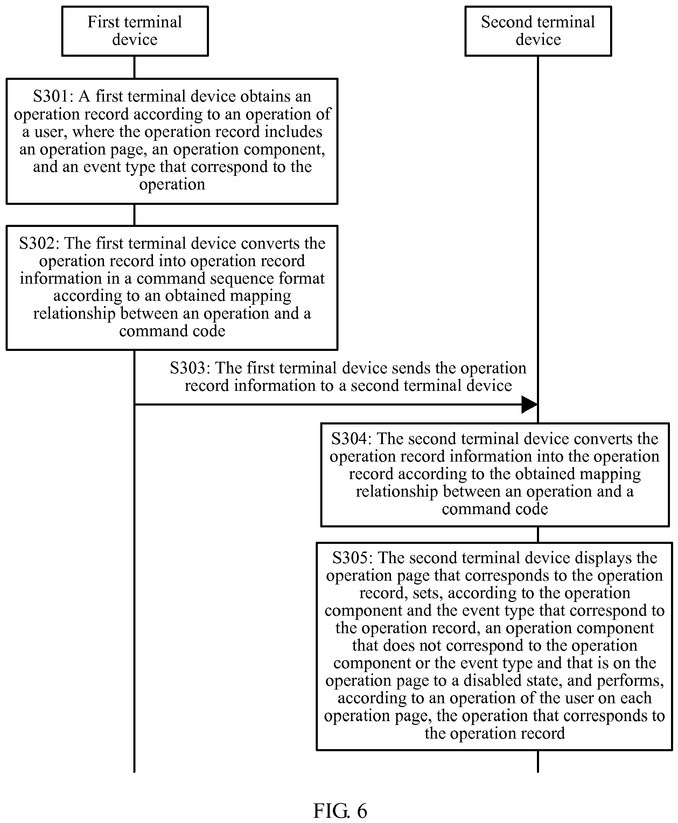

FIG. 6 is an interaction flowchart of Embodiment 3 of a method for providing an instruction in operating a terminal device according to an embodiment of the present invention. As shown in FIG. 6, after obtaining operation record information, to further save network resources, a first terminal device may convert a format of information included in the operation record information into a command sequence format for transmission. The manner includes the following specific implementation steps.

S301: The first terminal device obtains an operation record according to an operation of a user, where the operation record includes an operation page, an operation component, and an event type that correspond to the operation.

In this embodiment, the first terminal device needs to obtain the operation of the user. An implementation is to collect a page operated by the user on a touchscreen of the first terminal device, a clicked button, and a clicking event, to obtain the operation record of the user.

S302: The first terminal device converts the operation record into operation record information in a command sequence format according to an obtained mapping relationship between an operation and a command code.

In this embodiment, the command sequence format is a sequence format including a binary command code. The first terminal device needs to convert the obtained operation record of the user into a command sequence, so as to save network resources. Therefore, before this, the first terminal device needs to obtain the mapping relationship between an operation and a command code. The mapping relationship may be preconfigured, or may be set by a server. The first terminal device sends an obtaining request to the server, and receives the mapping relationship, carried in a response message sent by the server, between an operation and a command code. Alternatively, the mapping relationship between an operation and a command code may be obtained in another manner.

Preferably, a specific manner of obtaining the mapping relationship between an operation and a command code by the first terminal device is: sending, by the first terminal device, the obtaining request to the server, where the obtaining request is used to request to obtain the mapping relationship between an operation and a command code from the server; and
receiving, by the first terminal device, the response message sent by the server, where the response message includes the mapping relationship between an operation and a command code.

In a specific implementation, the first terminal device obtains the mapping relationship between an operation and a command code, then locally stores the mapping relationship, and updates the mapping relationship from the server regularly. Preferably, before conversion needs to be performed each time, a latest mapping relationship between an operation and a command code is obtained from the server. For example, the mapping relationship may be:

| | |
|---|---|
| Activiy.View1 \| Button 1 Click | 1000000 |
| Activiy.View1 \| Button2 \| DoubleClick | 1000001 |
| Activiy.View1 \| Button2 \| Click | 1000002 |

The first terminal device converts the obtained operation record into an operation record in a command sequence format according to the foregoing mapping relationship, that is, optimizes an instruction, to obtain operation record information, so that the operation is simplified to the utmost and network resources are further saved. The operation record information is used to instruct the second terminal device to set, according to the operation page, the operation component, and the event type that correspond to the operation, an operation component that does not correspond to the operation component or the event type and that is on the operation page to a disabled state.

S303: The first terminal device sends the operation record information to a second terminal device.

S304: The second terminal device converts the operation record information into the operation record according to the obtained mapping relationship between an operation and a command code.

In this embodiment, for a same terminal and a same system version, the second terminal device receives the operation record information that is in a command sequence format and that is sent by the first terminal device, and converts the operation record information in a command sequence format into the operation record according to the pre-obtained mapping relationship between an operation and a command code.

A specific implementation of obtaining the mapping relationship between an operation and a command code by the second terminal device is similar to that for the first terminal device. Preferably, the second terminal device sends an obtaining request to the server, and receives the mapping relationship, carried in the response message sent by the server, between an operation and a command code.

That is, before the second terminal device converts the operation record information into the operation record according to the obtained mapping relationship between an operation and a command code, the second terminal device sends the obtaining request to the server, and the obtaining request is used to request the mapping relationship between an operation and a command code from the server; and
the second terminal device receives the response message sent by the server, where the response message includes the mapping relationship between an operation and a command code.

S305: The second terminal device displays the operation page that corresponds to the operation record, sets, according to the operation component and the event type that correspond to the operation record, an operation component that does not correspond to the operation component or the event type and that is on the operation page to a disabled state, and performs, according to an operation of the user on each operation page, the operation that corresponds to the operation record.

In this embodiment, the second terminal device displays the operation page that corresponds to the operation record, disables, according to the operation component and the event type that correspond to the operation record, an operation component that does not correspond to an operation component or an event type corresponding to the operation record and that is on the operation page, and performs, based on triggering by the user, the operation that corresponds to the operation record. That is, the second terminal device is triggered by the user to perform the foregoing operation record. In a specific implementation, a terminal device searches for and displays an operation page and an operation component only according to the foregoing operation record. An event action is triggered by the user. Referring to the solution shown in FIG. 5a to FIG. 5e, a component that does not need to be clicked is disabled, and the user performs triggering to enter a next page, until settings are completed.

Disabling the component that does not need to be operated is not necessary, as long as the user is prompted where to perform an operation and how to perform the operation.

By means of the method for providing an instruction in operating a terminal device provided in this embodiment, a first terminal device collects an operation of a user, converts an operation record into operation record information in a command sequence format, and sends the operation record information to a second terminal device. The second terminal device converts the operation record information into an operation record, and is triggered by the user to perform the operation that corresponds to the operation record. Compared with an existing remote desktop implementation, by means of the present invention, a large quantity of images do not need to be transmitted, thereby effectively saving network resources. Moreover, the first terminal device cannot directly obtain content of the second terminal device, and cannot directly operate the second terminal device either, protecting privacy and security of the user. In addition, converting a format of the operation record into a command sequence format reduces a requirement on hardware of a client. Because the operation record is executed by means of triggering by the user, asynchronous execution and repeated playback can be implemented.

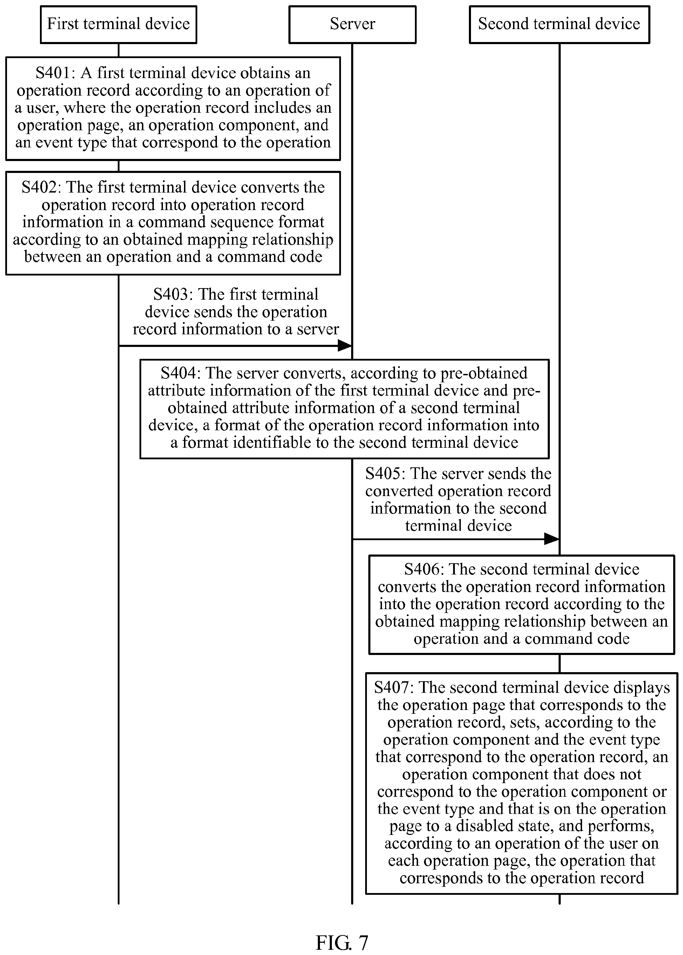

FIG. 7 is an interaction flowchart of Embodiment 4 of a method for providing an instruction in operating a terminal device according to an embodiment of the present invention. As shown in FIG. 7, after obtaining operation record information, to further save network resources, a first terminal device may convert information included in the operation record information into information in a command sequence format for transmission. Model information or version information of the first terminal device may be different from model information or version information of a second terminal device (model information is a model of a terminal device, and version information may be a system version of a terminal device, or may be a version of an application installed in a terminal device). Therefore, the operation record information needs to be sent to a server, so that a format of the operation record information is converted into a format identifiable to the second terminal device. Then, the operation record information is forwarded to the second terminal device for processing. Specific implementation steps of the manner are as follows.

S401: The first terminal device obtains an operation record according to an operation of a user, where the operation record includes an operation page, an operation component, and an event type that correspond to the operation.

In this embodiment, before obtaining the operation record and converting the operation record, the first terminal device receives a mapping relationship, sent by the server, between an operation and a command code.

S402: The first terminal device converts the operation record into the operation record information in a command sequence format according to the obtained mapping relationship between an operation and a command code.

The command sequence format is a sequence format including a binary command code. The operation record information is used to instruct the second terminal device to set, according to the operation page, the operation component, and the event type that correspond to the operation, an operation component that does not correspond to the operation component or the event type and that is on the operation page to a disabled state, that is, a forbidden state.

S403: The first terminal device sends the operation record information to the server.

In this embodiment, the first terminal device sends the operation record information to the server, so that the server converts, according to pre-obtained attribute information of the first terminal device and pre-obtained attribute information of the second terminal device, a format of the operation record information into a format identifiable to the second terminal device, and then sends the operation record information to the second terminal device. That is, the first terminal device sends the operation record information to the second terminal device by using the server.

S404: The server converts, according to pre-obtained attribute information of the first terminal device and pre-obtained attribute information of the second terminal device, the format of the operation record information into a format identifiable to the second terminal device.

In this embodiment, the server needs to pre-obtain the attribute information of the first terminal device and the attribute information of the second terminal device. A manner in which the server obtains the attribute information of the first terminal device may be active querying, or may be that the first terminal device actively reports the attribute information of the first terminal device. That is, the first terminal device sends the attribute information to the server. The attribute information of the first terminal device includes the model information and the version information of the first terminal device.

Similarly, the second terminal device sends the attribute information to the server. The attribute information of the second terminal device received by the server includes the model information and the version information of the second terminal device.

That is, the server separately receives the attribute information reported by the first terminal device and the attribute information reported by the second terminal device. After obtaining the attribute information of the first terminal device and the attribute information of the second terminal device, the server receives the operation record information that is sent by the first terminal device and that includes the operation page, the operation component, and the event type that correspond to the operation of the user obtained by the first terminal device, and converts the operation record, to generate operation record information in an instruction sequence format identifiable to a target terminal, that is, the second terminal device.

S405: The server sends the converted operation record information to the second terminal device.

In this embodiment, the second terminal device receives the identifiable operation record information sent by the server. The server is configured to convert, according to the attribute information of the first terminal device and the attribute information of the second terminal device, operation record information sent by the first terminal device into the operation record information identifiable to the second terminal device. For the second terminal device, the second terminal device receives the identifiable operation record information that is sent by the first terminal device by using the server. The identifiable operation record information is obtained by the server by converting, according to the attribute information of the first terminal device and the attribute information of the second terminal device, the operation record information sent by the first terminal device.

S406: The second terminal device converts the operation record information into the operation record according to the obtained mapping relationship between an operation and a command code.

In this embodiment, before converting the operation record information sent by the server, the second terminal device receives the mapping relationship, sent by the server, between an operation and a command code. A specific implementation of obtaining, by the second terminal device, the mapping relationship between an operation and a command code is: sending, by the second terminal device, an obtaining request to the server, where the obtaining request is used to request the mapping relationship between an operation and a command code from the server; and receiving, by the second terminal device, a response message sent by the server, where the response message includes the mapping relationship between an operation and a command code.

S407: The second terminal device displays the operation page that corresponds to the operation record, sets, according to the operation component and the event type that correspond to the operation record, an operation component that does not correspond to the operation component or the event type and that is on the operation page to a disabled state, and performs, according to an operation of the user on each operation page, the operation that corresponds to the operation record.

In this embodiment, the second terminal device displays the operation page that corresponds to the operation record, disables, according to the operation component and the event type that correspond to the operation record, an operation component and an event type that do not correspond to the operation record and that are on the operation page, and performs, by means of triggering by the user, the operation that corresponds to the operation record.

The first terminal device is equivalent to a source terminal, and may be a terminal device such as a mobile phone, an iPad, or a computer that can record and convert an operation instruction. The server may be a cloud server and implement an instruction push function and an instruction conversion function. The second terminal device is equivalent to a target terminal and may be a terminal device such as a mobile phone, an iPad, a tablet computer, or a computer that can play back an instruction.

A specific implementation procedure is as follows:
First, a source terminal selects terminal software that needs to record an operation and that includes system software and application software.

Then, the source terminal transmits model information to a cloud server, and obtains a preset mapping table (if the mapping table exists locally, it is determined only whether the mapping table is the latest), of latest software, between an operation and a command code. Definitions of a packet are as follows:
Request, terminal model information + software version information; and
Response, a preset mapping table (briefly referred to as a mapping table) between an operation and a command code.

The source terminal operates the terminal software, and when recording is ended, generates an instruction sequence according to an operation and the mapping table.

The source terminal sends the instruction sequence to the server. Definitions of a packet are as follows:
Request, target communication account + source terminal model information + software version information + instruction sequence; and
Response, a flag of a success or a failure.

The cloud server pushes a message obtaining command to a target terminal device according to the target communication account;
Request, a unique message flag of the cloud server + software version information; and
Response, none.

The target terminal device sends version information of the target terminal device to the cloud server according to received software version information, to obtain a converted instruction sequence (the converted instruction sequence is searched for locally if existing locally);
Request, a unique message flag of the cloud server + software version information; and
Response, target terminal instruction sequence.

The cloud server generates a target terminal instruction sequence according to the source terminal, software version information of the source terminal, the instruction sequence, the target terminal, and software version information of the target terminal, that is, obtains operation record information in an instruction sequence format, and returns a result to the target terminal.

The target terminal performs recovery in a wizard mode according to the received instruction sequence. That is, only an operation corresponding to an operation instruction on each page can be clicked and selected, and clicking or selection on all other positions is forbidden.

By means of the method for providing an instruction in operating a terminal device provided in this embodiment, a first terminal device collects an operation of a user, converts an operation record into operation record information in a command sequence format, and sends the operation record information to a second terminal device after the operation record information is converted by a server. The second terminal device converts the operation record information into an operation record, and is triggered by the user to perform the operation that corresponds to the operation record. Compared with an existing remote desktop implementation, by means of the present invention, a large quantity of images do not need to be transmitted, thereby effectively saving network resources. Moreover, the first terminal device cannot directly obtain content of the second terminal device, and cannot directly perform an operation on the second terminal device either, protecting privacy and security of the user. In addition, converting a format of the operation record into a command sequence format reduces a requirement on hardware of a client. Because the operation record is executed by means of triggering by the user, asynchronous execution and repeated playback can be implemented.

In addition, because the conversion performed by the server on the operation record information is introduced, a problem that a version or a system of the first terminal device is different from a version or a system of the second terminal device is overcome. This implements a cross-platform operation instruction. This instruction manner is simple, secure, and more intuitive than a voice/text manner.

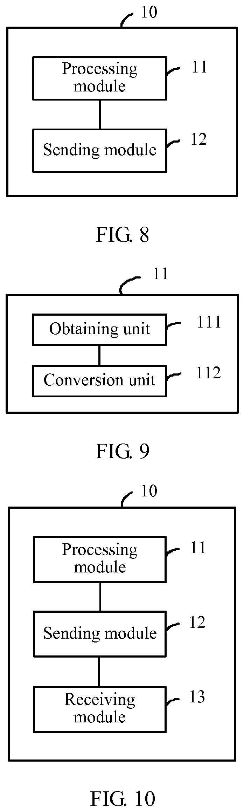

FIG. 8 is a schematic structural diagram of Embodiment 1 of an apparatus for providing an instruction in operating a terminal device according to an embodiment of the present invention. As shown in FIG. 8, the apparatus 10 for providing an instruction in operating a terminal device includes a processing module 11 and a sending module 12.

The processing module 11 is configured to generate operation record information according to an obtained operation of a user, where the operation record information includes an operation page, an operation component, and an event type that correspond to the operation.

The sending module 12 is configured to send the operation record information to a second terminal device.

The apparatus for providing an instruction in operating a terminal device provided in this embodiment is configured to execute the technical solutions of the first terminal device in FIG. 1 to FIG. 7, and implementation principles and technical effects thereof are similar. A first terminal device records an operation of a user, generates operation record information including an operation page, an operation component, and an event type, and sends the operation record information to a second terminal device. The second terminal device receives and displays the operation record information, and instructs a user in performing the operation according to the prompted operation page, the prompted operation component, and the prompted event type. Only operation record information needs to be transmitted between terminal devices, and a large quantity of remote images do not need to be transmitted, thereby effectively saving network resources.

FIG. 9 is a schematic structural diagram of Embodiment 2 of an apparatus for providing an instruction in operating a terminal device according to an embodiment of the present invention. As shown in FIG. 9, based on the foregoing embodiment, the processing module 11 includes:
an obtaining unit 111, configured to obtain an operation record according to the operation of the user, where the operation record includes the operation page, the operation component, and the event type that correspond to the operation; and
a conversion unit 112, configured to convert the operation record into the operation record information in a command sequence format according to an obtained mapping relationship between an operation and a command code, where the command sequence format is a sequence format including a binary command code.

Optionally, the operation record information generated by the processing module 11 is used to instruct the second terminal device to set, according to the operation page, the operation component, and the event type that correspond to the operation, an operation component that does not correspond to the operation component or the event type and that is on the operation page to a disabled state.

Optionally, the sending module 12 is further configured to send, to a server, attribute information of the apparatus for providing an instruction in operating a terminal device, where the attribute information includes model information and version information of the apparatus for providing an instruction in operating a terminal device. The sending module 12 is specifically configured to send the operation record information to the second terminal device by using the server.

FIG. 10 is a schematic structural diagram of Embodiment 3 of an apparatus for providing an instruction in operating a terminal device according to an embodiment of the present invention. As shown in FIG. 10, based on either of the foregoing embodiments, the sending module 12 is further configured to send an obtaining request to the server, where the obtaining request is used to request to obtain the mapping relationship between an operation and a command code from the server. The apparatus 10 for providing an instruction in operating a terminal device further includes:
a receiving module 13, configured to receive a response message sent by the server, where the response message includes the mapping relationship between an operation and a command code.

The apparatus for providing an instruction in operating a terminal device provided in this embodiment is configured to execute the technical solutions of the first terminal device in the method embodiments in FIG. 1 to FIG. 7. Implementation principles and technical effects thereof are similar, and details are not described herein again.

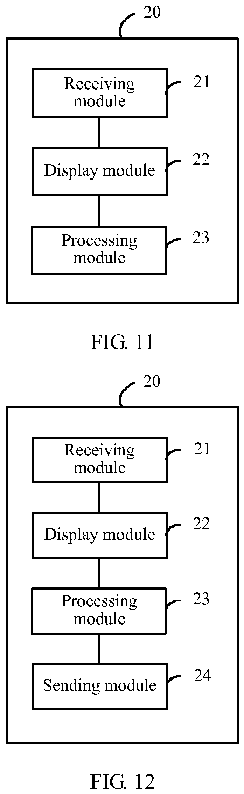

FIG. 11 is a schematic structural diagram of Embodiment 4 of an apparatus for providing an instruction in operating a terminal device according to an embodiment of the present invention. As shown in FIG. 11, the apparatus 20 for providing an instruction in operating a terminal device includes a receiving module 21, a display module 22, and a processing module 23.

The receiving module 21 is configured to receive operation record information sent by a first terminal device, where the operation record information includes an operation page, an operation component, and an event type that correspond to an operation.

The display module 22 is configured to present the operation record information.

The processing module 23 is configured to obtain the operation that corresponds to the operation page, the operation component, and the event type.

The apparatus for providing an instruction in operating a terminal device provided in this embodiment is configured to execute the technical solutions of the second terminal device in FIG. 1 to FIG. 7, and implementation principles and technical effects thereof are similar. A first terminal device records an operation of a user, generates operation record information including an operation page, an operation component, and an event type, and sends the operation record information to a second terminal device. The second terminal device receives and displays the operation record information, and instructs a user to perform the operation according to the prompted operation page, the prompted operation component, and the prompted event type. Only operation record information needs to be transmitted between terminal devices, and a large quantity of remote images do not need to be transmitted, thereby effectively saving network resources.

Optionally, the display module 22 is specifically configured to display the operation page in the operation record information; and
the processing module 23 is specifically configured to: set, according to the operation component and the event type in the operation record information, an operation component that does not correspond to the operation component or the event type and that is on the operation page to a disabled state, and perform, according to an operation of the user on the operation page, the operation that corresponds to the operation record.

Optionally, the processing module 23 is further configured to convert the operation record information into the operation record according to an obtained mapping relationship between an operation and a command code;
the display module 22 is configured to display the operation page that corresponds to the operation record; and
the processing module 23 is specifically configured to: set, according to the operation component and the event type that correspond to the operation record, an operation component that does not correspond to the operation component or the event type and that is on the operation page to a disabled state, and perform, according to an operation of the user on each operation page, the operation that corresponds to the operation record.

Optionally, the receiving module 21 is further configured to receive identifiable operation record information that is sent by the first terminal device by using a server, where the identifiable operation record information is obtained by the server by converting, according to attribute information of the first terminal device and attribute information of the second terminal device, the operation record information sent by the first terminal device.

FIG. 12 is a schematic structural diagram of Embodiment 5 of an apparatus for providing an instruction in operating a terminal device according to an embodiment of the present invention. As shown in FIG. 12, the apparatus 20 for providing an instruction in operating a terminal device further includes:
a sending module 24, configured to send, to the server, attribute information of the apparatus for providing an instruction in operating a terminal device, where the attribute information includes model information and version information of the apparatus for providing an instruction in operating a terminal device.

Optionally, the sending module 24 is further configured to send an obtaining request to the server, where the obtaining request is used to request to obtain the mapping relationship between an operation and a command code from the server; and the receiving module 21 is further configured to receive a response message sent by the server, where the response message includes the mapping relationship between an operation and a command code.

The apparatus for providing an instruction in operating a terminal device provided in this embodiment is configured to execute the technical solutions of the second terminal device in the method embodiments in FIG. 1 to FIG. 7. Implementation principles and technical effects thereof are similar, and details are not described herein again.

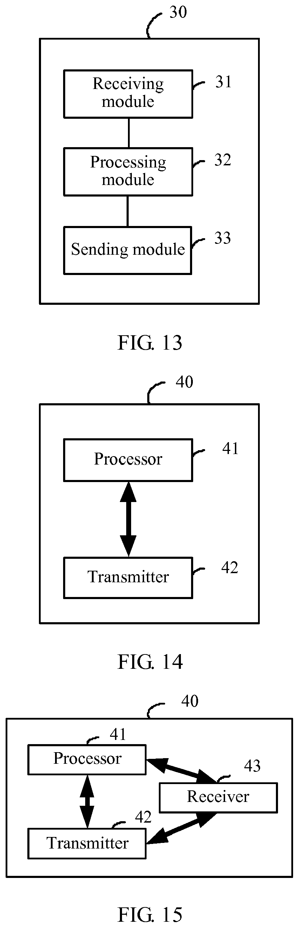

FIG. 13 is a schematic structural diagram of Embodiment 6 of an apparatus for providing an instruction in operating a terminal device according to an embodiment of the present invention. As shown in FIG. 13, the apparatus 30 for providing an instruction in operating a terminal device includes: a receiving module 31, a processing module 32, and a sending module 33.

The receiving module 31 is configured to receive operation record information sent by a first terminal device, where the operation record information includes an operation page, an operation component, and an event type that correspond to an operation of a user obtained by the first terminal device.

The processing module 32 is configured to convert, according to pre-obtained attribute information of the first terminal device and pre-obtained attribute information of a second terminal device, a format of the operation record information into a format identifiable to the second terminal device.

The sending module 33 is configured to send the converted operation record information to the second terminal device.

Optionally, the receiving module 31 is further configured to separately receive the attribute information reported by the first terminal device and the attribute information reported by the second terminal device, where the attribute information includes model information and version information.

The apparatus for providing an instruction in operating a terminal device provided in this embodiment is configured to execute the technical solutions of the server in the method embodiments in FIG. 1 to FIG. 7. Implementation principles and technical effects thereof are similar, and details are not described herein again.

FIG. 14 is a schematic structural diagram of Embodiment 1 of a terminal device according to an embodiment of the present invention. As shown in FIG. 14, the terminal device 40 includes:
a processor 41, configured to generate operation record information according to an obtained operation of a user, where the operation record information includes an operation page, an operation component, and an event type that correspond to the operation; and
a transmitter 42, configured to send the operation record information to a second terminal device.

Optionally, the processor 41 is specifically configured to:
obtain an operation record according to the operation of the user, where the operation record includes the operation page, the operation component, and the event type that correspond to the operation; and
convert the operation record into the operation record information in a command sequence format according to an obtained mapping relationship between an operation and a command code, where the command sequence format is a sequence format including a binary command code.

Optionally, the operation record information generated by the processor 41 is used to instruct the second terminal device to set, according to the operation page, the operation component, and the event type that correspond to the operation, an operation component that does not correspond to the operation component or the event type and that is on the operation page to a disabled state.

Optionally, the transmitter 42 is further configured to send attribute information to the server. The attribute information of the terminal device 40 includes model information and version information of the terminal device 40. The transmitter 42 is specifically configured to send the operation record information to the second terminal device by using the server.

FIG. 15 is a schematic structural diagram of Embodiment 2 of a terminal device according to an embodiment of the present invention. As shown in FIG. 15, based on the embodiment shown in FIG. 14, the transmitter 42 is further configured to send an obtaining request to the server, where the obtaining request is used to request to obtain a mapping relationship between an operation and a command code from the server.

The terminal device 40 further includes: a receiver 43, configured to receive a response message sent by the server, where the response message includes the mapping relationship between an operation and a command code.

The terminal device provided in this embodiment is configured to execute the technical solutions of the first terminal device in the method embodiments in FIG. 1 to FIG. 7. Implementation principles and technical effects thereof are similar, and details are not described herein again.

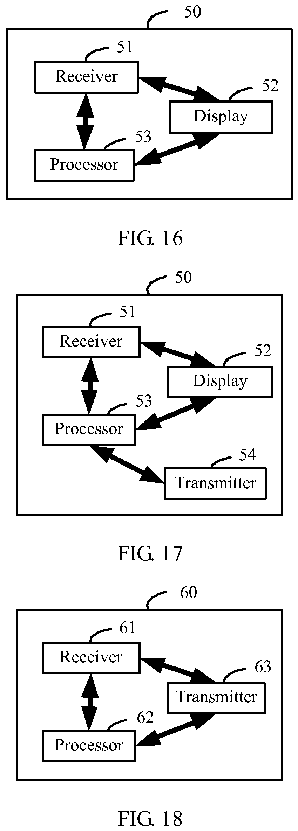

FIG. 16 is a schematic structural diagram of Embodiment 3 of a terminal device according to an embodiment of the present invention. As shown in FIG. 16, the terminal device 50 includes:
a receiver 51, configured to receive operation record information sent by a first terminal device, where the operation record information is generated by the first terminal device according to an operation of a user, and the operation record information includes an operation page, an operation component, and an event type that correspond to the operation of the user;
a display 52, configured to present the operation record information; and
a processor 53, configured to obtain the operation that corresponds to the operation page, the operation component, and the event type.

Optionally, the display 52 is specifically configured to display the operation page in the operation record information; and
the processor 53 is specifically configured to: set, according to the operation component and the event type in the operation record information, an operation component that does not correspond to the operation component or the event type and that is on the operation page to a disabled state, and perform, according to an operation of the user on the operation page, the operation that corresponds to the operation record.

Optionally, the processor 53 is specifically configured to convert the operation record information into the operation record according to the pre-obtained mapping relationship between an operation and a command code;
the display 52 is configured to display the operation page that corresponds to the operation record; and
the processor 53 is further configured to: set, according to the operation component and the event type that correspond to the operation record, an operation component that does not correspond to the operation component or the event type and that is on the operation page to a disabled state, and perform, according to an operation of the user on each operation page, the operation that corresponds to the operation record.

Optionally, the receiver 51 is specifically configured to receive identifiable operation record information that is sent by the first terminal device by using a server, where the identifiable operation record information is obtained by the server by converting, according to attribute information of the first terminal device and attribute information of the terminal device 50, the operation record information sent by the first terminal device.

FIG. 17 is a schematic structural diagram of Embodiment 4 of a terminal device according to an embodiment of the present invention. As shown in FIG. 17, based on the embodiment shown in FIG. 16, the terminal device 50 further includes a transmitter 54, configured to send the attribute information to the server, where the attribute information of the terminal device 50 includes model information and version information of the terminal device 50.

Optionally, the transmitter 54 is further configured to send an obtaining request to the server, where the obtaining request is used to request a mapping relationship between an operation and a command code from the server; and
the receiver 51 is further configured to receive a response message sent by the server, where the response message includes the mapping relationship between an operation and a command code.

The terminal device provided in this embodiment is configured to execute the technical solutions of the second terminal device in the method embodiments in FIG. 1 to FIG. 7. Implementation principles and technical effects thereof are similar, and details are not described herein again.

FIG. 18 is a schematic structural diagram of Embodiment 1 of a server according to an embodiment of the present invention. As shown in FIG. 18, the server 60 includes:
a receiver 61, configured to receive operation record information sent by a first terminal device, where the operation record information includes an operation page, an operation component, and an event type that correspond to an operation of a user obtained by the first terminal device;
a processor 62, configured to convert, according to pre-obtained attribute information of the first terminal device and pre-obtained attribute information of a second terminal device, a format of the operation record information into a format identifiable to the second terminal device; and
a transmitter 63, configured to send the converted operation record information to the second terminal device.

Optionally, the receiver 61 is further configured to separately receive the attribute information reported by the first terminal device and the attribute information reported by the second terminal device, where the attribute information includes model information and version information.

The server provided in this embodiment is configured to execute the technical solutions of the server in the method embodiments in FIG. 1 to FIG. 7. Implementation principles and technical effects thereof are similar, and details are not described herein again.

It should be understood that in the foregoing embodiments of the terminal device and server, the processor may be a central processing unit (English: Central Processing Unit, CPU for short), or may be another general-purpose processor, a digital signal processor (English: Digital Signal Processor, DSP for short), an application specific integrated circuit (English: Application Specific Integrated Circuit, ASIC for short), or the like. The general-purpose processor may be a microprocessor, or the processor may further be any conventional processor, or the like. The steps of the method disclosed with reference to the embodiments of the present invention may be directly performed by a hardware processor, or may be performed by using a combination of hardware in the processor and a software module.

Persons of ordinary skill in the art may understand that all or some of the steps of the method embodiments may be implemented by a program instructing relevant hardware. The program may be stored in a computer-readable storage medium. When the program is executed, steps of the foregoing method embodiments are performed. The foregoing storage media include: a read-only memory (English: read-only memory, ROM for short), a RAM, a flash memory, a hard disk, a solid state disk, a magnetic tape (English: magnetic tape), a floppy disk (English: floppy disk), an optical disc (English: optical disc), and any combination thereof.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A method for providing an instruction in operating a terminal device applied to a source terminal device, comprising:
generating(S101), by the source terminal device, operation record information according to an obtained operation of a user performed on the source terminal device, wherein the operation record information comprises an operation page, an operation component, and an event type that correspond to the operation, wherein the operation page is a system interface of the source terminal device or interface of an application, and the operation component is a component that may be operated on the operation page to trigger entering another operation page or event; and
sending(S 102), by the source terminal device, the operation record information to a target terminal device, wherein the operation record information is used to instruct the target terminal device to set, according to the operation page, the operation component, and the event type that correspond to the operation, an operation component that does not correspond to the operation component or the event type and that is on the operation page to a disabled state.

2. The method according to claim 1, wherein the generating, by a source terminal device, operation record information according to an obtained operation of a user comprises:
obtaining(S301, S401), by the source terminal device, an operation record according to the operation of the user, wherein the operation record comprises the operation page, the operation component, and the event type that correspond to the operation; and
converting(S302, S402), by the source terminal device, the operation record into the operation record information in a command sequence format according to an obtained mapping relationship between an operation and a command code, wherein the command sequence format is a sequence format comprising a binary command code

3. The method according to claim 1, wherein the method further comprises:
sending, by the source terminal device, attribute information to a server, wherein the attribute information of the source terminal device comprises model information and version information of the source terminal device; and
the sending(S303), by the source terminal device, the operation record information to a target terminal device comprises:
sending(S403), by the source terminal device, the operation record information to the target terminal device by using the server.

4. A method for providing an instruction in operating a terminal device applied to a target terminal device, comprising:
receiving(S201), by the target terminal device, operation record information sent by a source terminal device, wherein the operation record information comprises an operation page, an operation component, and an event type that correspond to an operation, wherein the operation page is a system interface of the source terminal device or interface of an application, and the operation component is a component that may be operated on the operation page to trigger entering another operation page or event; and
presenting(S202), by the target terminal device, the operation record information and obtaining the operation that corresponds to the operation page, the operation component, and the event type, wherein the presenting, by the target terminal device, the operation record information and obtaining the operation that corresponds to the operation page, the operation component, and the event type further comprises:
displaying, by the target terminal device, the operation page in the operation record information, setting, according to the operation component and the event type in the operation record information, an operation component that does not correspond to the operation component or the event type and that is on the operation page to a disabled state, and performing, according to an operation of a user on the operation page, the operation that corresponds to the operation record information.

5. The method according to claim 4, wherein the presenting, by the target terminal device, the operation record information and obtaining the operation that corresponds to the operation page, the operation component, and the event type comprises:
converting(S304, S406), by the target terminal device, the operation record information into an operation record according to an obtained mapping relationship between an operation and a command code; and
displaying(S305, S407), by the target terminal device, the operation page that corresponds to the operation record, setting, according to the operation component and the event type that correspond to the operation record, an operation component that does not correspond to the operation component or the event type and that is on the operation page to a disabled state, and performing, according to an operation of a user on each operation page, the operation that corresponds to the operation record.

6. The method according to claim 5, wherein the receiving, by a target terminal device, operation record information sent by a source terminal device comprises:
receiving, by the target terminal device, identifiable operation record information that is sent by the source terminal device by using a server, wherein the identifiable operation record information is obtained by the server by converting, according to attribute information of the source terminal device and attribute information of the target terminal device, the operation record information sent by the source terminal device.

7. The method according to any one of claim 5 or 6, wherein the obtaining, by the target terminal device, a mapping relationship between an operation and a command code comprises:
sending, by the target terminal device, an obtaining request to the server, wherein the obtaining request is used to request to obtain the mapping relationship between an operation and a command code from the server; and
receiving, by the target terminal device, a response message sent by the server, wherein the response message comprises the mapping relationship between an operation and a command code.

8. A source terminal device(10), comprising:
a processing module(11), configured to generate operation record information according to an obtained operation of a user performed on the source terminal device(10), wherein the operation record information comprises an operation page, an operation component, and an event type that correspond to the operation, wherein the operation page is a system interface or interface of an application of the source terminal device(10), and the operation component is a component that may be operated on the operation page; and
a sending module(12), configured to send the operation record information to a target terminal device, wherein the operation record information generated by the processing module(11) is used to instruct the target terminal device to set, according to the operation page, the operation component, and the event type that correspond to the operation, an operation component that does not correspond to the operation component or the event type and that is on the operation page to a disabled state.

9. A target terminal device(20), comprising:
a receiving module(21), configured to receive operation record information sent by a source terminal device, wherein the operation record information comprises an operation page, an operation component, and an event type that correspond to the operation, wherein the operation page is a system interface of the source terminal device or interface of an application, and the operation component is a component that may be operated on the operation page to trigger entering another operation page or event;
a display module(22), configured to present the operation record information; and
a processing module, configured to obtain the operation that corresponds to the operation page, the operation component, and the event type,
wherein the processing module (23) is further configured to set, according to the operation page, the operation component, and the event type that correspond to the operation, an operation component that does not correspond to the operation component or the event type and that is on the operation page to a disabled state.

## Patentansprüche

1. Verfahren zum Bereitstellen einer Anweisung zum Operieren einer Endgerätvorrichtung, die auf eine Quellenendgerätvorrichtung angewandt wird, umfassend:
Generieren (S101) von Operationsaufzeichnungsinformationen durch die Quellenendgerätvorrichtung gemäß einer erhaltenen Operation durch einen Benutzer, die auf der Quellenendgerätvorrichtung ausgeführt wurde, wobei die Operationsaufzeichnungsinformationen eine Operationsseite, eine Operationskomponente, und einen Ereignistyp umfassen, die der Operation entsprechen, wobei die Operationsseite eine Systemschnittstelle der Quellenendgerätvorrichtung oder eine Schnittstelle einer Anwendung ist, und wobei die Operationskomponente eine Komponente ist, die auf der Operationsseite operiert werden kann, um eine Eingabe einer anderen Operationsseite oder eines anderen Ereignisses auszulösen; und
Senden (S102) der Operationsaufzeichnungsinformationen an eine Zielendgerätvorrichtung durch die Quellenendgerätvorrichtung, wobei die Operationsaufzeichnungsinformationen dazu benutzt werden, die Zielendgerätvorrichtung dazu anzuweisen, eine Operationskomponente, die nicht der Operationskomponente oder dem Ereignistyp entspricht und die auf der Operationsseite ist, gemäß der Operationsseite, der Operationskomponente und dem Ereignistyp in einen deaktivierten Zustand zu versetzen.

2. Verfahren nach Anspruch 1, wobei das Generieren von Operationsaufzeichnungsinformationen durch eine Quellenendgerätvorrichtung gemäß einer erhaltenen Operation eines Benutzers Folgendes umfasst:
Erhalten (S301, S401) einer Operationsaufzeichnung durch die Quellenendgerätvorrichtung gemäß der Operation des Benutzers, wobei die Operationsaufzeichnung die Operationsseite, die Operationskomponente, und den Ereignistyp umfasst, die der Operation entsprechen; und
Umwandeln (S302, S402) der Operationsaufzeichnung in Operationsaufzeichnungsinformationen in einem Befehlssequenzformat gemäß einer erhaltenen Zuordnungsbeziehung zwischen einer Operation und einem Befehlscode durch die Quellenendgerätvorrichtung, wobei das Befehlssequenzformat ein Sequenzformat ist, dass einen binären Befehlscode umfasst.

3. Verfahren nach Anspruch 1, wobei das Verfahren ferner Folgendes umfasst:
Senden von Attributinformationen an einen Server durch die Quellenendgerätvorrichtung, wobei die Attributinformationen der Quellenendgerätvorrichtung Modellinformationen und Versionsinformationen der Quellenendgerätvorrichtung umfassen; und
wobei das Senden (S303) der Operationsaufzeichnungsinformationen an eine Zielendgerätvorrichtung durch die Quellenendgerätvorrichtung Folgendes umfasst:
Senden (S403) der Operationsaufzeichnungsinformationen durch die Quellenendgerätvorrichtung an die Zielendgerätvorrichtung durch Benutzen des Servers.

4. Verfahren zum Bereitstellen einer Anweisung zum Operieren einer Endgerätvorrichtung, die auf ein Zielendgerät angewandt wird, umfassend:
Empfangen (S201) von Operationsaufzeichnungsinformationen, die von einer Quellenendgerätvorrichtung gesendet wurden, durch die Zielendgerätvorrichtung, wobei die Operationsaufzeichnungsinformationen eine Operationsseite, eine Operationskomponente und einen Ereignistyp umfassen, die einer Operation entsprechen, wobei die Operationsseite eine Systemschnittstelle der Quellenendgerätvorrichtung oder eine Schnittstelle einer Anwendung ist, und wobei die Operationskomponente eine Komponente ist, die auf der Operationsseite operiert werden kann, um die Eingabe einer anderen Operationsseite oder eines anderen Ereignisses auszulösen; und
Präsentieren (S202) der Operationsaufzeichnungsinformationen durch die Zielendgerätvorrichtung und Erhalten der Operation, die der Operationsseite, der Operationskomponente, und dem Ereignistyp entspricht, wobei das Präsentieren der Operationsaufzeichnungsinformationen durch die Zielendgerätvorrichtung und das Erhalten der Operation, die der Operationsseite, der Operationskomponente und dem Ereignistyp entspricht, ferner Folgendes umfasst:
Anzeigen der Operationsseite in den Operationsaufzeichnungsinformationen durch die Zielendgerätvorrichtung, Versetzen einer Operationskomponente, die nicht der Operationskomponente oder dem Ereignistyp entspricht und die auf der Operationsseite ist, in einen deaktivierten Zustand gemäß der Operationskomponente und dem Ereignistyp in den Operationsaufzeichnungsinformationen, und Ausführen der Operation, die den Operationsaufzeichnungsinformationen entspricht, gemäß einer Operation eines Benutzers auf der Operationsseite.

5. Verfahren nach Anspruch 4, wobei das Präsentieren der Operationsaufzeichnungsinformationen durch die Zielendgerätvorrichtung und das Erhalten der Operation, die der Operationsseite, der Operationskomponente, und dem Ereignistyp entspricht, Folgendes umfasst:
Umwandeln (S304, S406) der Operationsaufzeichnungsinformationen in eine Operationsaufzeichnung gemäß einer erhaltenen Zuordnungsbeziehung zwischen einer Operation und einem Befehlscode durch die Zielendgerätvorrichtung; und
Anzeigen (S305, S407) der Operationsseite, die der Operationsaufzeichnung entspricht, durch die Zielendgerätvorrichtung, Versetzen einer Operationskomponente, die nicht der Operationskomponente oder dem Ereignistyp entspricht und die auf der Operationsseite ist, in einen deaktivierten Zustand gemäß der Operationskomponente und dem Ereignistyp, die der Operationsaufzeichnung entsprechen, und Ausführen der Operation, die der Operationsaufzeichnung entspricht, gemäß einer Operation eines Benutzers auf jeder Operationsseite.

6. Verfahren nach Anspruch 5, wobei das Empfangen der Operationsaufzeichnungsinformationen, die durch eine Quellenendgerätvorrichtung gesendet werden, durch eine Zielendgerätvorrichtung Folgendes umfasst:
Empfangen identifizierbarer Operationsaufzeichnungsinformationen, die durch Verwenden eines Servers von der Quellenendgerätvorrichtung gesendet werden, durch die Zielendgerätvorrichtung, wobei die identifizierbaren Operationsaufzeichnungsinformationen durch Umwandeln der Operationsaufzeichnungsinformationen, die durch die Quellenendgerätvorrichtung gesendet werden, gemäß der Attributinformationen der Quellenendgerätvorrichtung und der Attributinformationen der Zielendgerätvorrichtung durch den Server erhalten werden.

7. Verfahren nach einem der Ansprüche 5 oder 6, wobei das Erhalten einer Zuordnungsbeziehung zwischen einer Operation und einem Befehlscode durch die Zielendgerätvorrichtung Folgendes umfasst:
Senden einer Erhaltungsanforderung an den Server durch die Zielendgerätvorrichtung, wobei die Erhaltungsanforderung dazu verwendet wird, das Erhalten der Zuordnungsbeziehung zwischen einer Operation und einem Befehlscode von dem Server anzufordern; und
Empfangen einer vom Server gesendeten Antwortnachricht durch die Zielendgerätvorrichtung, wobei die Antwortnachricht die Zuordnungsbeziehung zwischen einer Operation und einem Befehlscode umfasst.

8. Quellenendgerätvorrichtung (10), umfassend:
ein Verarbeitungsmodul (11), das dazu konfiguriert ist, Operationsaufzeichnungsinformationen gemäß einer erhaltenen Operation einer Benutzers, die auf der Quellenendgerätvorrichtung (10) ausgeführt wird, zu generieren, wobei die Operationsaufzeichnungsinformationen eine Operationsseite, eine Operationskomponente und einen Ereignistyp umfassen, die der Operation entsprechen, wobei die Operationsseite eine Systemschnittstelle oder eine Schnittstelle einer Anwendung der Quellenendgerätvorrichtung (10) ist, und wobei die Operationskomponente eine Komponente ist, die auf der Operationsseite operiert werden kann; und
ein Sendemodul (12), das dazu konfiguriert ist, die Operationsaufzeichnungsinformationen an eine Zielendgerätvorrichtung zu senden, wobei die durch das Verarbeitungsmodul (11) generierten Operationsaufzeichnungsinformationen dazu verwendet werden, die Zielendgerätvorrichtung dazu anzuweisen, eine Operationskomponente, die nicht der Operationskomponente oder dem Ereignistyp entspricht und die auf der Operationsseite ist, gemäß der Operationsseite, der Operationskomponente und dem Ereignistyp, die der Operation entsprechen, in einen deaktivierten Zustand zu versetzen.

9. Zielendgerätvorrichtung (20), umfassend:
ein Empfängermodul (21), das dazu konfiguriert ist, Operationsaufzeichnungsinformationen zu empfangen, die von einer Quellenendgerätvorrichtung gesendet wurden, wobei die Operationsaufzeichnungsinformationen eine Operationsseite, eine Operationskomponente und einen Ereignistyp umfassen, die dem Operation entsprechen, wobei die Operationsseite eine Systemschnittstelle der Quellenendgerätvorrichtung oder eine Schnittstelle einer Anwendung ist, und wobei die Operationskomponente eine Komponente ist, die auf der Operationsseite operiert werden kann, um die Eingabe einer anderen Operationsseite oder eines anderen Ereignisses auszulösen;
ein Anzeigemodul (22), das dazu konfiguriert ist, die Operationsaufzeichnungsinformationen zu präsentieren; und
ein Verarbeitungsmodul, das dazu konfiguriert ist, die Operation, die der Operationsseite, der Operationskomponente und dem Ereignistyp entspricht, zu erhalten,
wobei das Verarbeitungsmodul (23) ferner dazu konfiguriert ist, eine Operationskomponente, die nicht der Operationskomponente oder dem Ereignistyp entspricht und die auf der Operationsseite ist, gemäß der Operationsseite, der Operationskomponente und dem Ereignistyp, die der Operation entsprechen, in einen deaktivierten Zustand zu versetzen.

## Revendications

1. Procédé pour fournir une instruction dans le fonctionnement d'un dispositif terminal appliqué à un dispositif terminal source, comprenant :
la génération (S101), par le dispositif terminal source, d'informations d'enregistrement d'opération en fonction d'une opération obtenue d'un utilisateur effectuée sur le dispositif terminal source, dans lequel les informations d'enregistrement d'opération comprennent une page d'opération, un composant d'opération et un type d'événement qui correspondent à l'opération, dans lequel la page d'opération est une interface de système du dispositif terminal source ou une interface d'une application et le composant d'opération est un composant qui peut être utilisé sur la page d'opération pour déclencher l'entrée dans une autre page d'opération ou événement ; et
l'envoi (S102), par le dispositif terminal source, des informations d'enregistrement d'opération à un dispositif terminal cible, dans lequel les informations d'enregistrement d'opération sont utilisées pour ordonner au dispositif terminal cible de régler, en fonction de la page d'opération, du composant d'opération et du type d'événement qui correspondent à l'opération, un composant d'opération qui ne correspond pas au composant d'opération ou au type d'événement et qui est sur la page d'opération à un état désactivé.

2. Procédé selon la revendication 1, dans lequel la génération, par un dispositif terminal source, d'informations d'enregistrement d'opération en fonction d'une opération obtenue d'un utilisateur comprend :
l'obtention (S301, S401), par le dispositif terminal source, d'un enregistrement d'opération en fonction de l'opération de l'utilisateur, dans lequel l'enregistrement d'opération comprend la page d'opération, le composant d'opération et le type d'événement qui correspondent à l'opération ; et
la conversion (S302, S402), par le dispositif terminal source, de l'enregistrement d'opération en les informations d'enregistrement d'opération dans un format de séquence de commande en fonction d'une relation de mappage obtenue entre une opération et un code de commande, dans lequel le format de séquence de commande est un format de séquence comprenant un code de commande binaire.

3. Procédé selon la revendication 1, dans lequel le procédé comprend en outre :
l'envoi, par le dispositif terminal source, d'informations d'attribut à un serveur, dans lequel les informations d'attribut du dispositif terminal source comprennent des informations de modèle et des informations de version du dispositif terminal source ; et
l'envoi (S303), par le dispositif terminal source, des informations d'enregistrement d'opération à un dispositif terminal cible comprend :
l'envoi (S403), par le dispositif terminal source, des informations d'enregistrement d'opération au dispositif terminal cible en utilisant le serveur.

4. Procédé pour fournir une instruction dans le fonctionnement d'un dispositif terminal appliqué à un dispositif terminal cible, comprenant :
la réception (S201), par le dispositif terminal cible, d'informations d'enregistrement d'opération envoyées par un dispositif terminal source, dans lequel les informations d'enregistrement d'opération comprennent une page d'opération, un composant d'opération et un type d'événement qui correspondent à une opération, dans lequel la page d'opération est une interface de système du dispositif terminal source ou une interface d'une application et le composant d'opération est un composant qui peut être utilisé sur la page d'opération pour déclencher l'entrée dans une autre page d'opération ou événement ; et
la présentation (S202), par le dispositif terminal cible, des informations d'enregistrement d'opération et l'obtention de l'opération qui correspond à la page d'opération, au composant d'opération et au type d'événement, dans lequel la présentation, par le dispositif terminal cible, des informations d'enregistrement d'opération et l'obtention de l'opération qui correspond à la page d'opération, au composant d'opération et au type d'événement comprennent en outre :
l'affichage, par le dispositif terminal cible, de la page d'opération dans les informations d'enregistrement d'opération, le réglage, en fonction du composant d'opération et du type d'événement dans les informations d'enregistrement d'opération, d'un composant d'opération qui ne correspond pas au composant d'opération ou au type d'événement et qui est sur la page d'opération à un état désactivé, et l'exécution, en fonction d'une opération d'un utilisateur sur la page d'opération, de l'opération qui correspond aux informations d'enregistrement d'opération.

5. Procédé selon la revendication 4, dans lequel la présentation, par le dispositif terminal cible, des informations d'enregistrement d'opération et l'obtention de l'opération qui correspond à la page d'opération, au composant d'opération et au type d'événement comprennent :
la conversion (S304, S406), par le dispositif terminal cible, des informations d'enregistrement d'opération en un enregistrement d'opération en fonction d'une relation de mappage obtenue entre une opération et un code de commande ; et
l'affichage (S305, S407), par le dispositif terminal cible, de la page d'opération qui correspond à l'enregistrement d'opération, le réglage, en fonction du composant d'opération et du type d'événement qui correspondent à l'enregistrement d'opération, d'un composant d'opération qui ne correspond pas au composant d'opération ou au type d'événement et qui est sur la page d'opération à un état désactivé, et l'exécution, en fonction d'une opération d'un utilisateur sur chaque page d'opération, de l'opération qui correspond à l'enregistrement d'opération.

6. Procédé selon la revendication 5, dans lequel la réception, par un dispositif terminal cible, d'informations d'enregistrement d'opération envoyées par un dispositif terminal source comprend :
la réception, par le dispositif terminal cible, d'informations d'enregistrement d'opération identifiables qui sont envoyées par le dispositif terminal source en utilisant un serveur, dans lequel les informations d'enregistrement d'opération identifiables sont obtenues par le serveur en convertissant, en fonction d'informations d'attribut du dispositif terminal source et d'informations d'attribut du dispositif terminal cible, les informations d'enregistrement d'opération envoyées par le dispositif terminal source.

7. Procédé selon l'une quelconque de la revendication 5 ou 6, dans lequel l'obtention, par le dispositif terminal cible, d'une relation de mappage entre une opération et un code de commande comprend :
l'envoi, par le dispositif terminal cible, d'une requête d'obtention au serveur, dans lequel la requête d'obtention est utilisée pour demander d'obtenir la relation de mappage entre une opération et un code de commande à partir du serveur ; et
la réception, par le dispositif terminal cible, d'un message de réponse envoyé par le serveur, dans lequel le message de réponse comprend la relation de mappage entre une opération et un code de commande.

8. Dispositif terminal source (10) comprenant :
un module de traitement (11) configuré pour générer des informations d'enregistrement d'opération en fonction d'une opération obtenue d'un utilisateur effectuée sur le dispositif terminal source (10), dans lequel les informations d'enregistrement d'opération comprennent une page d'opération, un composant d'opération et un type d'événement qui correspondent à l'opération, dans lequel la page d'opération est une interface de système ou une interface d'une application du dispositif terminal source (10), et le composant d'opération est un composant qui peut être utilisé sur la page d'opération ; et
un module d'envoi (12) configuré pour envoyer les informations d'enregistrement d'opération à un dispositif terminal cible, dans lequel les informations d'enregistrement d'opération générées par le module de traitement (11) sont utilisées pour ordonner au dispositif terminal cible de régler, en fonction de la page d'opération, du composant d'opération et du type d'événement qui correspondent à l'opération, un composant d'opération qui ne correspond pas au composant d'opération ou au type d'événement et qui est sur la page d'opération à un état désactivé.

9. Dispositif terminal cible (20) comprenant :
un module de réception (21) configuré pour recevoir des informations d'enregistrement d'opération envoyées par un dispositif terminal source, dans lequel les informations d'enregistrement d'opération comprennent une page d'opération, un composant d'opération et un type d'événement qui correspondent à l'opération, dans lequel la page d'opération est une interface de système du dispositif terminal source ou une interface d'une application et le composant d'opération est un composant qui peut être utilisé sur la page d'opération pour déclencher l'entrée dans une autre page d'opération ou événement ;
un module d'affichage (22) configuré pour présenter les informations d'enregistrement d'opération ; et
un module de traitement configuré pour obtenir l'opération qui correspond à la page d'opération, au composant d'opération et au type d'événement,
dans lequel le module de traitement (23) est configuré en outre pour régler, en fonction de la page d'opération, du composant d'opération et du type d'événement qui correspondent à l'opération, un composant d'opération qui ne correspond pas au composant d'opération ou au type d'événement et qui est sur la page d'opération à un état désactivé.
